# EUROPEAN PATENT APPLICATION

(11) **EP 0 951 940 A2**
(43) Date of publication of application: **27.10.1999**
(21) Application number: 99107198.6
(22) Date of filing: 13.04.1999
(51) Int. Cl.: B03C 1/18, C10G 11/18

(54) **Magnetic separation using hot separator high-strength magnets**

(30) Priority: 24.04.1998 US 65765
(71) Applicant: Kellogg Brown & Root, Inc., Houston, Texas 77002-7990 (US)
(72) Inventor: Goolsby, Terry L., Katy, Texas, 77450 (US); Kowalczyk, Dennis C., Gibsonia, Pennsylvania, 15044 (US)
(74) Representative: Weiss, Wolfgang, Dipl.-Chem. Dr.

(57) **Abstract**

A magnetic separator for use in conjunction with a fluid catalytic cracking system has roller devices incorporating permanent magnets with a moving device that receives catalyst particles and passes over the magnets. The permanent magnets may be incorporated into a roller device which moves a flexible belt that receives catalyst particles from the fluid catalytic cracking system and passes them over the magnets. The particles are deposited on the belt and travel to the roller having the magnets. Older, less effective catalyst particles are attracted to the magnets on which the belt is rotated and are held by the magnets longer than newer, more effective catalyst particles. The permanent magnets are high strength neodymium/iron/boron magnets in one embodiment and samarium/cobalt magnets in a second embodiment. The magnets are stacked S-NN-SS-NN-SS-N to provide a more effective magnetic field. In the first embodiment, high strength magnets made from neodymium/iron/boron operate efficiently at 250°F without extensive cooling equipment. In the second embodiment, high strength magnets made from samarium/cobalt operate efficiently at 450°F without extensive cooling equipment.

## Description

### FIELD OF THE INVENTION

The present invention pertains to magnetic separation of older, less effective fluid catalytic cracking catalyst particles from newer more effective catalyst particles and more particularly to the magnetic separation of less effective catalyst particles from more effective catalyst particles using special alloy permanent magnets at high temperatures without extensive cooling equipment.

### BACKGROUND OF THE INVENTION

As the cost of operating a refinery increases due to environmental constraints, increases in raw materials and maintenance costs, refiners look for processes which improve refining margins with the least amount of capital investment. Fluid catalytic cracking (FCC), in particular, has a significant bottom line effect on both refining revenue generation and cost. In the fluid catalytic cracking process, the oil being refined is heated during catalytic activity. In addition, new catalyst is being added and old catalyst is being removed. This process provides costs at both ends. Fluid catalytic cracking operating costs include virgin catalyst purchase as well as the cost of spent catalyst removal and disposal, which can be significant at times.

Both of these costs can be lessened to a degree by utilization of magnetic separation. This process removes the older, more metallic laden, less active fluid cracking catalyst from the equilibrium fluid catalytic cracking inventory by dry magnetic separation techniques to produce a lower metals, higher activity and selectivity catalyst. In this regard, less catalyst must be replaced, resulting in less old catalyst to be disposed of and less new catalyst to be purchased.

Magnetic separation techniques have been around for years in the mining, food and other industries. These techniques include the utilization of eddy currents, electromagnets and permanent magnets for separation of magnetic from non magnetic material on a wet or dry basis. Utilization of eddy currents and electromagnets are relatively expensive and operating costs are usually high due to the consumption of electricity. Permanent magnets are generally used in operations where the material being removed exhibits strong ferromagnetic and/or paramagnetic properties. However, even the use of permanent magnets has difficulties in the temperature of operation in the recycling of catalyst operation. Permanent magnets will deteriorate, lose their magnetism, when operated in any type of vibrating environment and subjected to heat at the same time. As a result, much expense goes into providing cooling systems to assure efficient operation. Patents that are typical of magnetic separation for catalyst separation are as follows.

U.S. Patent 4,882,043 to Jung illustrates the use of a magnetic separation method. This patent relates to a method and apparatus for the separation of diamagnetic and paramagnetic particulate material utilizing a magnetic roll formed of either alternating permanent and nonmagnetic spacer disc elements or alternating spacer disc elements and disc elements in which magnetism is induced. The dry admixture to be separated into magnetically homogeneous fractions is fed as a plurality of discrete streams onto spaced points on the upper surface of the rotating roll. The feed material undergoes lateral separation on the face of the roll and the materials of different properties part from the surface of the roll at different angular positions, thereby enabling their separate collection. For this purpose a plurality of receptacles are provided in a horizontally spaced relationship to collect the individual streams of diamagnetic material as they leave the surface of the rotating roll. In the process of this patent the streams of diamagnetic material off of the last roll pass through a high voltage field whereby they undergo an electrostatic separation.

A typical patent illustrating the use of magnetic separators is U.S. Patent 5,198,098 Hettinger. This patent relates to a catalytic process for heavy hydrocarbon conversion, usually in the presence of nickel and vanadium on the catalyst and in the feedstock, to produce lighter molecular weight fractions. Manganese, which has paramagnetic properties, is added so it progressively accumulates on aged catalyst, and enhances magnetic separation of aged catalyst, to increase activity and improve selectivity of the remaining catalyst which is recycled. Manganese acts as a "magnetic hook" to separate more magnetic, older, less catalytically active and less selective, higher metals containing catalyst particulates from less magnetically active, lower metal containing, more catalytically active and selective catalyst fractions, which are then recycled back to the unit.

A typical refinery uses a large amount of fluid catalytic cracking catalyst in a fluid catalyst cracking process. The ability to recover a significant amount of good catalyst from that withdrawn from the regenerator provides a significant advantage in the use of a fluid catalytic cracking unit.

Fluid catalytic cracking converts crude oil fractions heavier than gasoline and diesel fuels into consumer usable products. A silica-alumina zeolite heterogeneous catalyst is used to promote an acid initiated carbonium ion cracking mechanism between 900°F to 1300°F to produce a wide range of products such as propane, gasoline, kerosene, diesel and various petrochemicals. These crude oil fractions contain metals such as nickel and vanadium that collect on and deactivate the cracking catalyst. Iron is also present in these fractions, but nickel and vanadium contribute the most to deactivation of the catalyst acidity and subsequently the activity.

As these metals accumulate, the catalyst becomes deactivated over a period of time and fresh fluid catalytic cracking catalyst is added in order to maintain unit activity. Catalyst is also withdrawn to maintain a constant amount of catalyst in the unit inventory. The withdrawn catalyst contains a dynamic mixture of catalyst particles from inactive, very old, high metals particles to relatively fresh low metals, high activity particles. In order to produce a separation using magnetic separation techniques, the catalyst must exhibit magnetic properties with a distribution of magnetic susceptibility being the most important. As metals are deposited onto the catalyst over a period of time, the magnetic susceptibility of the catalyst particles increases and magnetic separation can be achieved more easily.

In commercial application, spent catalyst from the regenerator is cooled and fed onto the belt of the magnetic separation unit. The catalyst passes over a permanent magnet where the highest magnetic catalyst is bound on the belt by magnetic forces. As the roller rotates, the least magnetic catalyst is thrown away from the belt and the magnetic catalyst follows around until it passes the magnet. At that point, the magnetic forces diminish and the high metals, low activity catalyst falls into a collection hopper. The least magnetic or lower metals, higher activity catalyst is recycled back to the fluid catalytic cracking unit and the highest magnetic catalyst is typically discarded.

The magnetic separation process is based on a dry processing of equilibrium fluid catalytic cracking catalyst. Separation of the equilibrium fluid catalytic cracking catalyst is accomplished by the combination of magnetic, gravitational and centrifugal forces (momentum). The amount of magnetic force acting upon the catalyst particle results from a relationship between the magnetic field from the rare earth magnet roll and the thickness of the belt. The gravitational force pulls the catalyst particle downward and the centrifugal force is produced by the speed of the belt and the size of the roller acting upon the weight and/or size of the particle to give the particle momentum to overcome -the magnetic field. To achieve a separation at a specific percentage, the magnet strength, roller size, belt speed, belt type, belt thickness, material feed rate onto the belt and the magnetic susceptibility of the material being separated must be considered.

The different belt types used in magnetic separation provide one means to effectively separate materials with different magnetic susceptibilities. The higher the magnetic susceptibility, the thicker the belt needed to produce the desired split or separation. There is some overlap between the belt thickness used in the separations and the magnetic properties of the catalysts being separated. As stated previously, magnetic separation rate of a fluid catalytic cracking catalyst is a combination of several variables, of which belt speed, belt type, belt thickness and magnet strength are significant considerations.

### SUMMARY OF THE INVENTION

The present invention provides a magnetic separator for use in conjunction with a fluid catalytic cracking system that has roller devices incorporating permanent magnets with a belt type device passing over the magnets. The permanent magnets are of high strength, specially developed alloys that are capable of operation at high temperatures without loss of effectiveness. In using the present invention, the magnetic separator does not require an extensive cooling system to maintain efficiency. The permanent magnets may be incorporated into a roller device which moves a flexible belt that receives catalyst particles from the fluid catalytic cracking system. The particles are deposited on the belt and travel to the roller having the magnets. Older, less effective catalyst particles are attracted to the magnets on which the belt is rotated and are held by the magnets longer than newer, more effective catalyst particles.

The permanent magnets are high strength magnets made from neodymium/iron/boron in one embodiment and high strength permanent magnets made from samarium/cobalt in a second embodiment. The magnets are stacked S-NN-SS-NN-SS-N to provide a more effective magnetic field. In the first embodiment, high strength neodymium/iron/boron magnets operate efficiently at 250°F without extensive cooling equipment. In the second embodiment, samarium/cobalt magnets operate efficiently at 450°F without extensive cooling equipment.

### BRIEF DESCRIPTION OF THE DRAWINGS

Figure 1 is a plan view of a magnetic separator unit having magnetic and non-magnetic rollers.
Figure 2 is a - sectional view of the magnetic roller of Figure 1 illustrating the configuration of the permanent magnets.

### DESCRIPTION OF THE PREFERRED EMBODIMENT

The magnetic separation process is based on a dry processing of equilibrium FCC catalyst. Separation of the equilibrium FCC catalyst is accomplished by the combination of magnetic, gravitational and centrifugal forces (momentum). The amount of magnetic force acting upon the catalyst particle results from a relationship between the magnetic field from the rare earth magnet roll and the thickness of the belt. The gravitational force pulls the catalyst particle downward and the centrifugal force is produced by the speed of the belt and the size of the roller acting upon the weight and/or size of the particle to give the particle momentum to overcome the magnetic field. To achieve a separation at a specific percentage, the magnet strength, roller size, belt speed, belt type, belt thickness, material feed rate onto the belt and the magnetic susceptibility of the material being separated must be considered.

The different belt types used in magnetic separation provide one means to effectively separate materials with different magnetic susceptibilities. The higher the magnetic susceptibility, the thicker the belt needed to produce the desired split or separation. There is some overlap between the belt thickness used in the separations and the magnetic properties of the catalysts being separated. As stated previously, magnetic separation rate of an FCC catalyst is a combination of several variables, of which belt speed, belt type, belt thickness and magnet strength are significant considerations.

The present invention provides a method and apparatus for the separation of older, less active catalyst particles from active catalyst particles in a fluid catalytic cracking (FCC). The method and apparatus of the present invention performs the separation of older, less active catalyst particles through magnetic separation while taking into consideration that the magnetic separation rate of an FCC catalyst is dependent upon belt speed, belt type, belt thickness and magnet strength. The present invention includes a magnetic roller made of high strength, high temperature magnets. Traditional magnets used in magnetic separation have all been some standard form of permanent magnets that require extensive cooling to be effective for long periods of time.

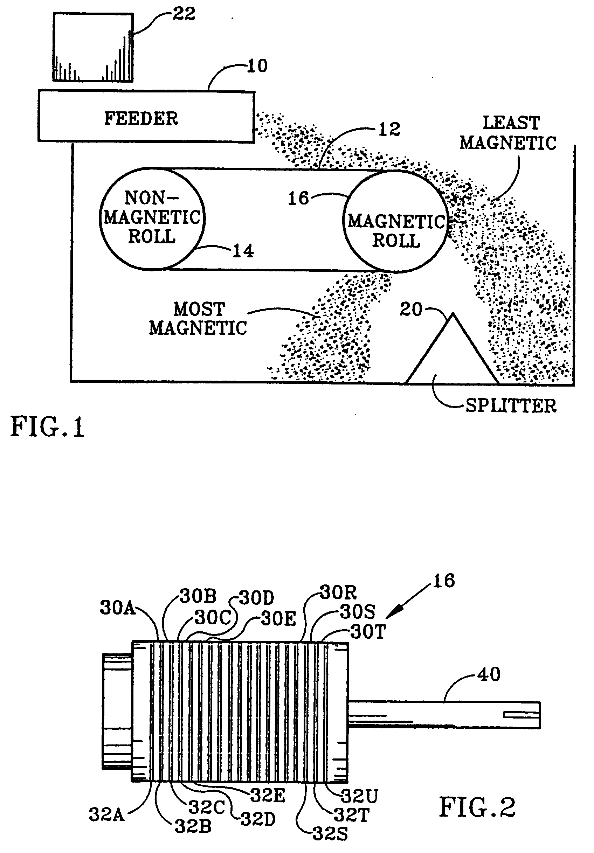

Referring now to Figure 1, an abbreviated magnetic separator system is illustrated. The only portion of the process that is illustrated is the belt with the two rollers. In practice, there is a flow line (not shown) to feeder **10** which deposits catalyst particles on flexible continuous belt **12**. Belt **12** is stretched over follower roll **14** and leader roll **16.** In general, follower roll **14** is non-magnetic and functions primarily to provide a complete path for belt **12** to travel. Leader roller **16** is magnetic and preferably is comprised of a plurality of disc shaped permanent magnets separated by spacers.

As the catalyst particles are deposited on belt **12**, they are carried forward over leader roller **16**. When they reach the end of leader roller **16,** the newer, less contaminated particles that are less magnetic continue and are thrown past splitter **20** and are recirculated to the catalytic process. The older, more contaminated and less effective catalyst particles are held longer by magnetic leader roller **16** and fall to the near side of splitter **20**. These particles may be disposed of in a normal manner. A cooling device **22** is used to cool the stream of catalyst particles to a temperature of approximately 250°F for the first embodiment and 450°F for the second embodiment. This represents a significant advance in the art since prior systems required cooling the stream to 100°F or lower to operate effectively for long periods of time.

In principle, a stream of catalytic particles are placed on belt **12**. As belt **12** rotates, the catalyst particles are carried forward and establish momentum. Paramagnetic impurities and ferromagnetic impurities that adhere to the catalyst particles are attracted to the magnets or are influenced by the magnetic field provided by the magnets and extended through belt **12.**

Newly added catalyst particles without a great amount of impurities are not influenced as greatly by the magnetic field and when the particles reach the end of belt **12**, they continue with substantial momentum past the end of the roller where belt **12** turns around and returns to the starting point where more catalyst particles are placed on belt **12.** Catalyst particles having a large amount of contamination, either through feedstock impurities or added rare earth paramagnetic "hooks", are drawn back to leader roller **16** due to magnetic attraction.

In a first embodiment of the present invention, leader roller **16** is made of high strength magnets made from neodymium/iron/boron and operate efficiently at 250°F without extensive cooling equipment. In the second embodiment, high strength magnets made from samarium/cobalt operate efficiently at 450°F without extensive cooling equipment.

Depending on the catalyst being used, the average particle size range of a typical FCC equilibrium catalyst is between ten and one hundred fifty microns, with an average of about forty microns. If a woven mesh belt, such as aromatic polyamide fiber available under the trade designation KEVLAR®, is used for belt **12**, the mesh spacing would be required to be smaller than seventy microns to prevent an excessive amount of catalyst from being wedged in the belt spaces. The actual spacing size is to be determined based upon the catalyst being used and the degree to which the catalyst is to be kept out of the belt. Although the wedged particles might become dislodged when the flexible mesh belt rounds the rollers, particles will eventually fill the mesh spacings and marginally reduce the mesh belt flexibility.

Referring now to Figure 2, a side view of the magnetic roller **16** of Figure 1 is illustrated as having a plurality of disc shaped magnets **30A-30T**, with disc shaped spacers **32A-32U** on either side of each magnet **30A-30T**, all mounted on shaft **40.** Shaft **40** may be driven by any means currently in use in the art, electrically, either DC or AC, hydraulics, etc., as long as it has the capability of being driven from 0-350 revolutions per minute.

Magnets **30A-30T** are configured so that north poles face each other on adjacent magnets and south poles also face each other on adjacent magnets. Between each magnet **30A-30T** is a spacer **32A-32U.** Thus, the series of discs is spacer **32A,** magnet **30A,** spacer **32B,** magnet **30B,** spacer **32C**, magnet **30T**, and spacer **32U**. In the preferred embodiment, a total of twenty-one spacers **32** are used, one to separate each magnet and one on either end. Spacers **32** may be either magnetic or non-magnetic material. Non-magnetic material is easier to work with since the natural repulsion of the two north or two south poles facing each other can be significant depending on the strength of the magnets. However, using magnetic materials can be used to focus or direct the combined magnetic force of the two magnets side by side.

In the preferred embodiment, twenty magnets **30** are used, however, any number may be used as long as the are configured such that like poles face each other. Magnets **30** are high strength neodymium/iron/boron magnets in one embodiment and samarium/cobalt magnets in a second embodiment. The magnets are stacked S-NN-SS-NN-SS-N to provide a more effective magnetic field. In the first embodiment, high strength magnets made from neodymium/iron/boron operate efficiently at 250°F without extensive cooling equipment. In the second embodiment, high strength magnets made from samarium/cobalt operate efficiently at 450°F without extensive cooling equipment. may also be of any type of permanent magnets currently in use in the art.

While there has been illustrated and described a particular embodiment of the present invention, it will be appreciated that numerous changes and modifications will occur to those skilled in the art, and it is intended in the appended claims to cover all those changes and modifications which fall within the true spirit and scope of the present invention.

A magnetic separator for use in conjunction with a fluid catalytic cracking system has roller devices incorporating permanent magnets with a moving device that receives catalyst particles and passes over the magnets. The permanent magnets may be incorporated into a roller device which moves a flexible belt that receives catalyst particles from the fluid catalytic cracking system and passes them over the magnets. The particles are deposited on the belt and travel to the roller having the magnets. Older, less effective catalyst particles are attracted to the magnets on which the belt is rotated and are held by the magnets longer than newer, more effective catalyst particles. The permanent magnets are high strength neodymium/iron/boron magnets in one embodiment and samarium/cobalt magnets in a second embodiment. The magnets are stacked S-NN-SS-NN-SS-N to provide a more effective magnetic field. In the first embodiment, high strength magnets made from neodymium/iron/boron operate efficiently at 250°F without extensive cooling equipment. In the second embodiment, high strength magnets made from samarium/cobalt operate efficiently at 450°F without extensive cooling equipment.

## Claims

1. A magnetic separator for use in conjunction with a fluid catalytic cracking system to separate a stream of catalyst particles removing older, less effective catalyst particles comprising:
roller device incorporating permanent magnets;
a belt type device passing over the magnets;
a mechanism for depositing the catalyst particles on said belt type device to travel to said roller device; and
a cooling device for cooling the stream to a temperature of from about 150°F to 450°F.

2. The magnetic separator according to claim 1 wherein said cooling device cools the stream to a temperature of from about 150°F to 250°F and said permanent magnets are high strength neodymium/iron/boron magnets.

3. The magnetic separator according to claim 2 wherein said roller device includes:
a first roller made of nonmagnetic material; and
a second roller made of permanent magnets.

4. The magnetic separator according to claim 3 wherein said belt type device includes a nonmagnetic aromatic polyamide fiber belt.

5. The magnetic separator according to claim 3 wherein said belt type device includes a magnetic belt.

6. The magnetic separator according to claim 2 wherein said permanent magnets are stacked S-NN-SS-NN-SS-N to provide a more effective magnetic field.

7. The magnetic separator according to claim 1 wherein said cooling device cools the stream to 250°F to 450°F and said permanent magnets are samarium/cobalt magnets.

8. The magnetic separator according to claim 7 wherein said roller device includes:
a first roller made of nonmagnetic material; and
a second roller made of permanent magnets.

9. The magnetic separator according to claim 8 wherein said belt type device includes a nonmagnetic aromatic polyamide fiber belt.

10. The magnetic separator according to claim 8 wherein said belt type device includes a magnetic belt.

11. The magnetic separator according to claim 7 wherein said permanent magnets are stacked S-NN-SS-NN-SS-N to provide a more effective magnetic field.
